(19) **Europäisches Patentamt / European Patent Office / Office européen des brevets**

(11) **EP 2 285 637 B1**

(12) **FASCICULE DE BREVET EUROPEEN**

(45) Date de publication et mention de la délivrance du brevet:
**23.01.2013 Bulletin 2013/04**

(21) Numéro de dépôt: **09761897.9**

(22) Date de dépôt: **14.05.2009**

(51) Int Cl.:
*B60W 20/00* (2006.01)        *B60W 30/02* (2012.01)
*B60K 6/52* (2007.10)        *B60W 10/06* (2006.01)
*B60W 10/08* (2006.01)        *B60W 10/18* (2012.01)

(86) Numéro de dépôt international:
**PCT/FR2009/050897**

(87) Numéro de publication internationale:
**WO 2009/150346 (17.12.2009 Gazette 2009/51)**

(54) **SYSTEME ET PROCEDE DE COMMANDE D'UN VEHICULE A QUATRE ROUES MOTRICES**

SYSTEM UND VERFAHREN ZUR STEUERUNG EINES FAHRZEUGS MIT VIERRADANTRIEB

SYSTEM AND METHOD FOR CONTROLLING A FOUR WHEEL DRIVE VEHICLE

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **20.05.2008 FR 0853272**

(43) Date de publication de la demande:
**23.02.2011 Bulletin 2011/08**

(73) Titulaire: **Renault S.A.S.**
**92100 Boulogne-Billancourt (FR)**

(72) Inventeurs:
• **CLAEYS, Xavier**
  **F-75015 Paris (FR)**
• **MARSILIA, Marco**
  **F-92100 Boulogne-Billancourt (FR)**
• **FOUSSARD, François**
  **F-76100 Rouen (FR)**

(56) Documents cités:
EP-A- 0 361 708        FR-A- 2 901 762
FR-A- 2 906 778        US-A1- 2003 132 044
US-B2- 6 957 874        US-B2- 7 216 943

**Description**

La présente invention concerne le domaine des systèmes de commande de véhicules automobiles, et plus particulièrement, les systèmes de commande de groupes motopropulseurs et de dispositifs de freinage de véhicules automobiles hybrides.

Les véhicules intégrant des machines électriques afin d'assurer leur propulsion sont de plus en plus prisés pour leur silence et les économies de carburant qu'ils procurent.

Toutefois, la coordination de ces machines électriques entre elles ou avec d'autres organes de propulsion nécessite une électronique: de contrôle évoluée. Par ailleurs, les fonctions de freinage pouvant être assurées en partie par un fonctionnement en tant que générateur de ces machines électriques, il est important de contrôler également l'aspect freinage.

Ainsi, il existe un besoin d'un système de commande apte à gérer l'intégration des machines électriques dans les fonctions de propulsion et de freinage d'un véhicule automobile.

Le document US-B2-6 957 874 divulgue un système de commande d'un véhicule automobile du type à propulsion hybride à quatre roues motrices équipé d'au moins un groupe motopropulseur sur chaque train de roues, un premier groupe motopropulseur comprenant au moins un moteur thermique, un deuxième groupe motopropulseur comprenant au moins une machine électrique, le véhicule étant également équipé d'un système de freinage par friction sur chacune des roues motrices et de capteurs, le système comprenant un moyen de répartition d'une requête de freinage entre le système de freinage par friction et au moins une machine électrique d'un groupe motopropulseur, ladite machine électrique étant capable de délivrer un couple résistant, un moyen de modulation des consignes de couple à destination des systèmes de freinage et des groupes motopropulseurs en fonction des signaux provenant des capteurs, un moyen de commande des groupes motopropulseurs, le moyen de répartition, le moyen de modulation des consignes de couple et le moyen de commande des groupes motopropulseurs étant capables d'interagir dynamiquement afin d'émettre des commandes de couple vers les groupes motopropulseurs et vers les systèmes de freinage par friction en vue de favoriser la stabilité du véhicule.

La présente invention a pour objet un système et un procédé de commande des machines électriques d'un véhicule quatre roues motrices.

La présente invention a également pour objet un système et un procédé de commande des machines électriques d'un véhicule quatre roues motrices utilisées en tant que système de freinage.

Selon un aspect de l'invention, on définit un système de commande d'un véhicule automobile du type à propulsion hybride à quatre roues motrices équipé d'au moins un groupe motopropulseur sur chaque train de roues, un premier groupe motopropulseur comprenant au moins un moteur thermique, un deuxième groupe motopropulseur comprenant au moins une machine électrique, le véhicule étant également équipé d'un système de freinage par friction sur chacune des roues motrices et des capteurs.

Le système de commande comprend un moyen de répartition d'une requête de freinage entre le système de freinage par friction et au moins une machine électrique d'un groupe motopropulseur, apte à déterminer des couples de freinage au niveau de chaque roue compensés en fonction du couple résistant du groupe motopropulseur correspondant, ladite machine électrique étant capable de délivrer un couple résistant, un moyen de modulation des consignes de couple à destination des systèmes de freinage et des groupes motopropulseurs apte à déterminer des plages de couples sur chaque essieu ainsi que des consignes de freinage sécuritaire au niveau de chaque roue, les plages et les consignes étant déterminés en fonction des signaux provenant des capteurs, le moyen de modulation (10) comprenant en outre un moyen de comparaison (48) apte à déterminer la consigne transmise aux dispositifs de freinage (5a,5b,5c,5d) parmi les couples de freinage au niveau de chaque roue compensés provenant du moyen de répartition (9) et les consignes de freinage sécuritaire au niveau de chaque roue provenant du moyen de modulation (10), un moyen de commande des groupes motopropulseurs apte à déterminer des valeurs de couples des groupes motopropulseurs et à comparer les valeurs de couples aux plaffes de couples sur chaque essieu provenant du moyen de modulation (10) afin de déterminer des valeurs cible de couple des groupes motopropulseurs (1,2), le moyen de répartition du freinage, le moyen de modulation des consignes de couple et le moyen de commande des groupes motopropulseurs étant capables d'interagir dynamiquement afin d'émettre des commandes de couple vers les groupes motopropulseurs et vers les systèmes de freinage par friction en vue de favoriser la stabilité du véhicule.

Le système de commande peut être appliqué à un véhicule muni de moyens d'aide à la conduite. Le moyen de détermination de la stabilité peut comprendre un dispositif de coordination du freinage capable de prendre en compte de façon concertée et hiérarchisée les signaux provenant des moyens d'aide à la conduite.

Le moyen de commande des groupes motopropulseurs peut, en outre, comprendre un dispositif de coordination du couple moteur capable de prendre en compte de façon concertée et hiérarchisée les signaux provenant des moyens d'aide à la conduite, des capteurs et du moyen de détermination de la stabilité du véhicule.

Le premier groupe motopropulseur peut être relié au train avant et le deuxième train motopropulseur peut être relié au train arrière, le moyen de modulation des consignes de couple étant alors capable de limiter le freinage récupératif du train arrière afin de favoriser l'adhérence dudit train arrière.

Le moyen de détermination de la stabilité du véhicule peut comprendre un moyen de commande apte à exercer une sollicitation sur le système de freinage par friction ne générant pas de couple de force mais réduisant la durée de réponse à une sollicitation ultérieure.

Selon un autre aspect de l'invention, on définit un procédé de commande d'un véhicule automobile du type à propulsion hybride à quatre roues motrices équipé d'au moins un groupe motopropulseur sur chaque train de roues, un premier groupe motopropulseur comprenant au moins un moteur thermique, un deuxième groupe motopropulseur comprenant au moins une machine électrique. Le procédé de commande comprend des étapes au cours desquelles :

on détermine des couples de freinage au niveau de chaque roue compensés en fonction du couple résistant du groupe motopropulseur correspondant,
on détermine des plages de couples sur chaque essieu ainsi que des consignes de freinage sécuritaire au niveau de chaque roue,
on détermine la consigne transmise aux dispositifs de freinage (5a,5b,5c,5d) parmi les couples de freinage au niveau de chaque roue compensés provenant du moyen de répartition (9) et les consignes de freinage sécuritaire au niveau de chaque roue provenant du moyen de modulation (10),
on détermine des valeurs de couples des groupes motopropulseurs et
on compare les valeurs de couples aux plages de couples sur chaque essieu provenant du moyen de modulation (10) afin de déterminer des valeurs cible de couple des groupes motopropulseurs (1,2).

On peut déterminer à l'intérieur des plages de couple de freinage récupératif précédemment déterminées des couples de freinage récupératif pour le train avant en régime statique, le train arrière en régime statique, pour le train avant en régime dynamique et pour le train avant en régime dynamique, les couples de freinage étant déterminés en fonction des couples de freinage par friction de chaque dispositif de freinage par friction.

Par ailleurs, le procédé de commande peut être appliqué à un véhicule muni de moyens d'aide à la conduite. On peut alors hiérarchiser la prise en compte des consignes de couple de freinage provenant des moyens d'aide à la conduite afin de déterminer des consignes de freinage favorisant la stabilité du véhicule.

On peut limiter le freinage récupératif sur le train arrière afin de favoriser la stabilité du véhicule.

On peut également déterminer une consigne minimale de couple de freinage par friction, afin d'augmenter la vitesse de réponse des dispositifs de freinage en cas de requête de freinage impliquant une utilisation importante du freinage par friction.

D'autres buts, caractéristiques et avantages apparaîtront à la lecture de la description suivante donnée uniquement en tant qu'exemple non limitatif et faite en référence aux dessins annexés sur lesquels :

- la figure 1 illustre les principaux éléments compris dans un véhicule équipé d'un système de commande; et
- la figure 2 illustre les principaux éléments compris dans un système de commande ; et
- la figure 3 illustre les principaux éléments compris dans un dispositif de coordination du couple mateur ; et
- les figures 4 et 5 illustrent les principaux éléments compris dans un dispositif de coordination du freinage.

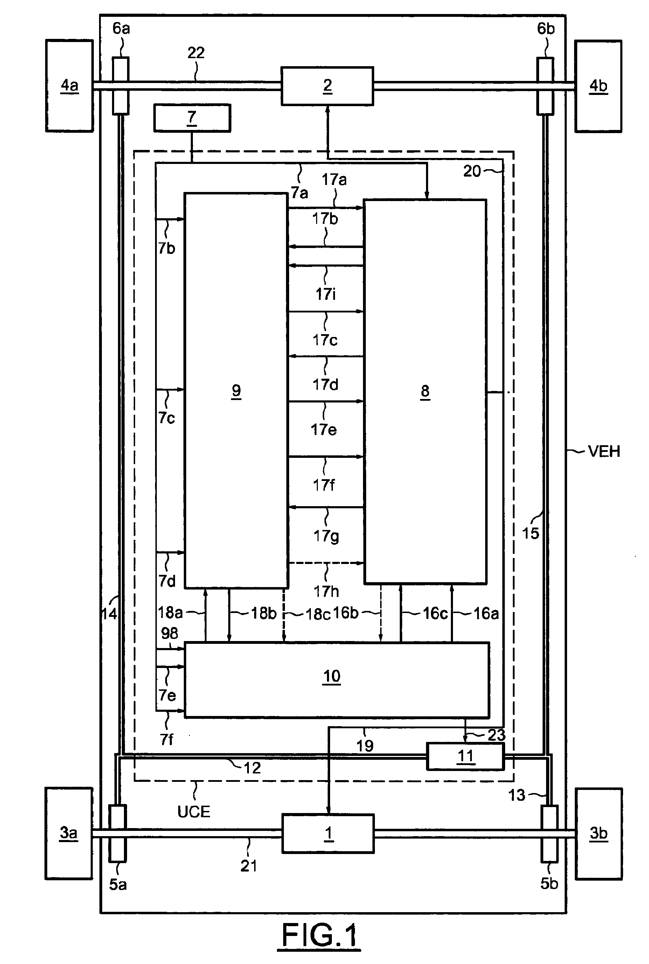

Sur la figure 1, on peut voir un véhicule automobile dénommé VEH comprenant les principaux organes d'un système de commande. Le véhicule VEH comprend un groupe motopropulseur avant 1 relié à un train de roues avant 3a;3b par l'intermédiaire d'un axe 21 et un groupe motopropulseur arrière 2 relié à un train de roues arrières 4a;4b par l'intermédiaire d'un axe 22. La roue 3a est équipée d'un dispositif de freinage 5a, la roue 3b d'un dispositif 5b, la roue 4a d'un dispositif 6a et la roue 4b d'un dispositif 6b.

Une unité de commande électronique identifiée par la référence UCE commande les dispositifs de freinage 5a, 5b, 6a et 6b par l'intermédiaire des connexions 12, 13, 14 et 15. L'unité de commande électronique UCE commande également les groupes motopropulseurs avant 1 et arrière 2 par l'intermédiaire des liaisons 19 et 20, respectivement.

L'unité de commande électronique UCE est reliée à des capteurs 7 par les connexions 7a, 7b, 7c, 7d, 7e et 7f. L'unité de commande électronique UCE comprend un moyen de commande 8 des groupes motopropulseurs, un moyen de répartition 9 d'une requête de freinage, un moyen de modulation 10 des consignes de couple et un système de commande 11 des dispositifs de freinage. Le moyen de commande 8 des groupes motopropulseurs est relié en sortie par la connexion 19 au groupe motopropulseur avant 1, par la connexion 20 au groupe motopropulseur arrière 2. Le système de commande 11 des dispositifs de freinage est relié par la connexion 12 et par les connexions 13, 14 et 15 aux dispositifs de freinage 5a, 5b, 6a et 6b,

Le moyen de répartition 9 d'une requête de freinage et le moyen de modulation 10 des consignes de couple à destination des systèmes de freinage et des groupes motopropulseurs sont reliés entre eux par les connexions 18a, 18b et 18c, Le moyen de répartition 9 d'une requête de freinage est relié au moyen de commande 8 des groupes motopropulseurs par les connexions 17a, 17b, 17c, 17d, 17e, 17f, 17g, 17h et 17i. Le moyen de modulation 10 des consignes de couple à destination des systèmes de freinage et des groupes motopropulseurs est relié au moyen de commande 8 des groupes motopropulseurs par les connexions 16a, 16b et 16c. Le moyen de modulation 10 des consignes de couple à destination des systèmes de freinage et des groupes motopropulseurs est relié au système de commande 11 des dispositifs de freinage par la connexion 23.

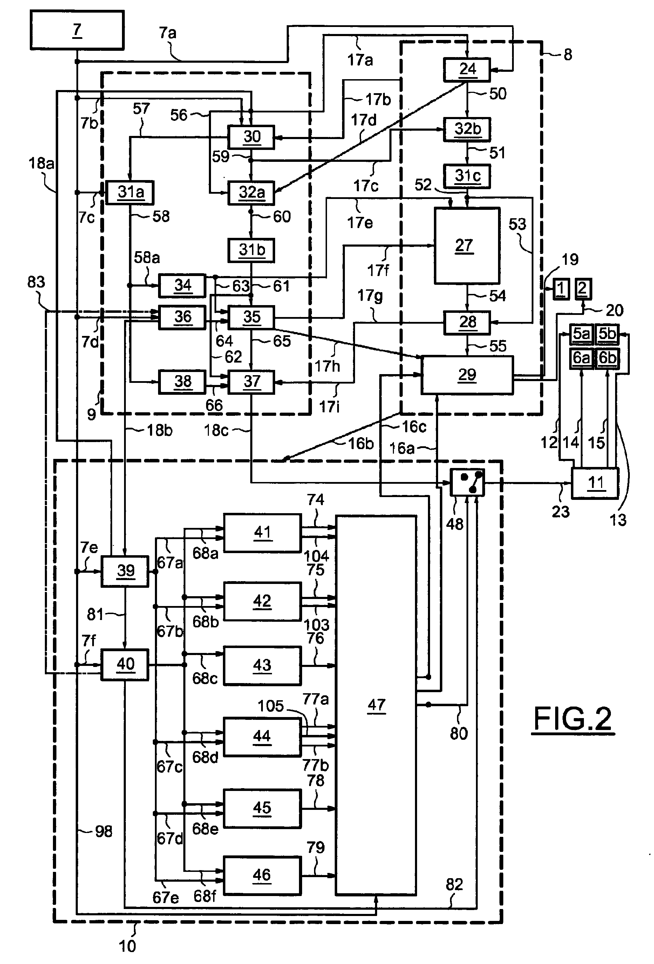

Sur la figure 2, on peut voir les différents moyens compris dans le système de commande, notamment le moyen de commande 8 des groupes motopropulseurs, un moyen de répartition 9 d'une requête de freinage et un moyen de modulation 10 des consignes de couple.

Le moyen de répartition 9 d'une requête de freinage comprend les organes suivante.

Un moyen d'interprétation 30 de la pédale de frein est relié par la connexion 18a à un moyen de calcul 39 de la vitesse de référence compris dans le moyen de modulation 10. Le moyen d'interprétation 30 est également relié en entrée au capteur 7 par la dérivation 7b de la connexion 7a, ainsi qu'au moyen de commande 8 des groupes motopropulseurs par la connexion 17b.

Le moyen d'interprétation 30 est relié en sortie à un moyen de compensation 31a par la connexion 57 et à un moyen de calcul 32a de l'accélération du véhicule par la connexion 59.

Le moyen de calcul 32a de l'accélération du véhicule est relié par la dérivation 56 de la connexion 18a au moyen de calcul 39 de la vitesse de référence compris dans le moyen de modulation 10. Le moyen de calcul 32a de l'accélération est également relié en entrée, par la connexion 17d, au moyen d'interprétation 24 de la pédale d'accélération du moyen de commande 8 des groupes motopropulseurs. Le moyen de calcul 32a de l'accélération est relié en sortie au moyen de compensation 31b par la connexion 60.

Le moyen de compensation 31b est connecté au moyen de détermination 35 de la répartition du freinage récupératif entre les trains avant et arrière par la connexion 61, et au moyen de compensation 37 du freinage par friction par la dérivation 62 de la connexion 61.

Le moyen de compensation 31a est connecté par une de ses entrées aux capteurs 7 par la dérivation 7c. Le moyen de compensation 31a est connecté en sortie au moyen de détermination 34 du freinage récupératif maximum par la dérivation 58a de la connexion 58, et au moyen de détermination 38 de la consigne de préfreinage par la connexion 58.

Le moyen de détermination 34 du freinage récupératif maximum est relié par une de ses sorties au moyen d'optimisation 27 de consignes des groupes motopropulseurs du moyen de commande 8 des groupes motopropulseurs par la connexion 17e. Le moyen de détermination 34 du freinage récupératif maximum est également relié en sortie par la dérivation 63 de la connexion 17e au moyen de détermination 35 de la répartition du freinage récupératif entre les trains avant et arrière.

Le moyen d'interprétation 36 de la situation est relié en entrée par la connexion 7d aux capteurs 7. Le moyen d'interprétation 36 est relié en sortie par la connexion 64 au moyen de détermination 35 de la répartition du freinage récupératif entre les trains avant et arrière. Le moyen d'interprétation 36 est également relié en sortie par la connexion 18b au moyen de calcul 39 de la vitesse de référence compris dans le moyen due modulation 10.

Le moyen de détermination 38 de la consigne de préfreinage est relié en sortie au moyen de compensation 37 du freinage par friction par la connexion 66.

Le moyen de détermination 35 de la répartition du freinage récupératif entre les trains avant et arrière est relié par ses sorties au moyen de compensation 37 du freinage par friction par la connexion 65, au moyen d'optimisation 27 de consignes des groupes motopropulseurs du moyen de commande 8 par la connexion 17f et au dispositif de coordination 29 du couple moteur par la connexion 17h.

Le moyen de compensation 37 du freinage par friction est relié par une de ses entrées au moyen de compensation dynamique 28 des consignes des groupes motopropulseurs compris dans le moyen de commande 8 des groupes motopropulseurs par la connexion 17i. Le moyen de compensation 37 est relié en sortie par la connexion 18c au commutateur 48 du moyen de modulation 10.

Le moyen de modulation 10 des consignes de couple à destination des systèmes de freinage et des groupes motopropulseurs comprend les principaux organes suivants.

Le moyen de calcul 39 due la vitesse de référence est connecté en entrée aux capteurs 7 par la connexion 7e et au moyen d'interprétation 36 de la situation par la connexion 18b. Le moyen de calcul 39 est relié en sortie au moyen d'interprétation 30 par la connexion 18a, au moyen de détermination 40 de la situation par la connexion 81, à un dispositif 41 de contrôle électronique de la stabilité (en anglais, ESP) par la connexion 67a, à un dispositif ABS 42 par à connexion 67b, à un dispositif de contrôle de la traction 44 par la connexion 67c, à un dispositif d'interdiction du freinage récupératif sur le train arrière 45 par la connexion 67d et à un dispositif de support de la vitesse de référence 46 par la connexion 67e.

Le moyen de détermination 40 de la situation est relié en entrée aux capteurs 7 par la connexion 7f. Le moyen de détermination 40 due la situation est relié en sortie au commutateur 48 par la connexion 82, au dispositif 41 de contrôle électronique de la stabilité par la connexion 68a, au dispositif ABS 42 par la connexion 68b, à un dispositif RHF 43 par la connexion 68c, au dispositif de contrôle de la traction 44 par la connexion 68d, au dispositif d'interdiction du freinage récupératif sur le train arrière 45 par la connexion 68e et au dispositif de support de la vitesse de référence 46 par la connexion 68f.

Le dispositif de coordination du freinage 47 est relié par ses entrées au dispositif ESP 41 par les connexions 74 et 104, au dispositif ABS 42 par les connexions 75 et 103, au dispositif RHF 43 par la connexion 76, au dispositif de contrôle de la traction 44 par les connexions 77a, 77b et 105, au dispositif d'interdiction du freinage récupératif sur le train arrière 45 par la connexion 78 et au dispositif de support de la vitesse de référence 46 par la connexion 79.

Le dispositif de coordination du freinage 47 est relié par ses sorties au commutateur 48 par la connexion 80 et au dispositif de coordination 29 du couple moteur par les connexions 16a et 16c.

Le commutateur 48 est relié en sortie au système de commande 11 des dispositifs de freinage par l'intermédiaire de la connexion 23,

Le moyen de commande 8 des groupes motopropulseurs comprend les principaux composants suivants.

Le moyen d'interprétation 24 de la pédale d'accélération est relié par une de ses entrées aux capteurs 7 par la connexion 7a. Le moyen 24 d'interprétation est relié par une de ses sorties au moyen de calcul 32b de l'accélération du véhicule par la connexion 50.

Le moyen de calcul 32b de l'accélération du véhicule est relié en entrée au moyen d'interprétation 30 de la pédale de frein par la dérivation 17c de la connexion 59. Le moyen de calcul 32b de l'accélération du véhicule est relié en sortie au moyen de compensation 31c par la connexion 51.

Le moyen de compensation 31c est relié en sortie au moyen d'optimisation 27 de consignes des groupes motopropulseurs par la connexion 52, et au moyen de compensation dynamique 28 des consignes des groupes motopropulseurs par la dérivation 53 de la connexion 52.

Le moyen d'optimisation 27 de consignes des groupes motopropulseurs est connecté par au moins une de ses entrées au moyen de détermination 34 du freinage récupératif maximum par la connexion 17e. Le moyen d'optimisation 27 est connecté en sortie par la connexion 54 au moyen de compensation dynamique 28 des consignes des groupes motopropulseurs.

Le moyen de compensation dynamique 28 des consignes des groupes motopropulseurs est relié par au moins une de ses entrées par la dérivation 53 de la connexion 52 au moyen de compensation 31c. Le moyen de compensation dynamique 28 des consignes des groupes motopropulseurs est relié par au moins une de ses sorties au dispositif de coordination 29 du couple moteur par la connexion 55 est au moyen de compensation 37 du Freinage par friction par la connexion 17i.

Le dispositif de coordination 29 du couple moteur est connecté par au moins une de ses entrées au moyen de détermination 35 de la répartition du freinage récupératif entre les trains avant et arrière par la connexion 17h et par la connexion 16c au dispositif de coordination du freinage 47. Le dispositif de coordination 29 du couple moteur est relié en sortie aux groupes motopropulseurs avant 1 et arrière 2 par les connexions 19 et 20.

Les capteurs 7 fournissent une information concernant la position de la pédale de freinage XBP sens ou la pression du maître cylindre P_MC_sens au moyen d'interprétation 30. Le moyen d'interprétation 30 reçoit également une estimation de la vitesse longitudinale du véhicule VVH_x_est par la connexion 18a, ainsi que la décélération minimale générée par la résistance mécanique des groupes motopropulseurs pour une accélération nulle GPT min, également appelée décélération en lever de pied.

Le moyen d'interprétation 30 détermine alors la décélération due à l'enfoncement de la pédale de frein GBP_sp et la dérivée par rapport au temps de la décélération due à l'enfoncement de la pédale de frein dGBP_sp. Les variables GBP_sp et dGBP_sp sont émises par la connexion 57 et la variable GBP_sp est émise par la connexion 59.

Le moyen de calcul 32a de l'accélération du véhicule reçoit l'estimation de la vitesse longitudinale du véhicule VVH_x_est par la dérivation 56 et l'accélération générée par les groupes motopropulseurs GPT_sp. Le moyen de calcul 32a de l'accélération du véhicule détermine alors la consigne d'accélération du véhicule GWH_sp selon la requête du conducteur.

Le moyen de compensation 31b reçoit alors la consigne d'accélération du véhicule GWH_sp et détermine la consigne de couple total du véhicule TWH_sp en appliquant la relation suivante.

$$TWH\_sp = M \cdot R \cdot GWH\_sp$$

avec M = la masse estimée du véhicule et
R = le rayon estimé de la roue

Parallèlement, le moyen de compensation 31a reçoit en entrée les variables GBP_sp et dGBP_sp. Le moyen de compensation 31a détermine alors le couple dû à l'enfoncement de la pédale de frein TBP_sp et la dérivée du couple dû à l'enfoncement de la pédale de frein dTBP_sp.

$$TBP\_sp = M \cdot R \cdot GBP\_sp$$

$$dTBP\_sp = M \cdot R \cdot dGBP\_sp$$

Le moyen de détermination 34 du freinage récupératif maximum reçoit en entrée le couple dû à l'enfoncement de la pédale de frein TBP_sp et la dérivée du couple dû à l'enfoncement de la pédale de frein dTBP_sp, Le moyen de détermination 34 du freinage récupérait maximum détermine alors le couple minimum de freinage hors freinage par friction TNBP_min.

Le moyen d'interprétation 36 de la situation reçoit des capteurs 7 l'angle de braquage des roues ASW_sens. D'autre part, le moyen d'interprétation 36 de la situation reçoit des signaux logiques reflétant l'interdiction d'utiliser le freinage récupératif sur le train arrière Flag_int_recup et l'activation du mode quatre roues motrices optimisé Flag_4wd_opt provenant tous deux du moyen de modulation 10 des consignes de couple.

Le moyen d'interprétation 36 de la situation détermine alors le seuil de potentiel d'adhérence en traction Mu_trac, le seuil de potentiel d'adhérence en freinage récupératif Mu_recup, le seuil dynamique de potentiel d'adhérence en traction Mu_trac_dyn, et le seuil dynamique de potentiel d'adhérence en freinage récupératif Mu_recup_dyn.

Le moyen de détermination 35 reçoit la consigne de couple total du véhicule TWH_sp, le couple minimum de freinage hors freinage par friction TNBP_min, le seuil de potentiel d'adhérence en traction Mu_trac, le seuil de potentiel d'adhérence en freinage récupératif Mu_recup, le seuil dynamique de potentiel d'adhérence en traction Mu_trac_dyn, et le seuil dynamique de potentiel d'adhérence en freinage récupératif Mu_recup_dyn.

Le moyen de détermination 35 détermine alors le couple minimal sur l'essieu arrière en régime quasi statique TPT_r_min, le couple maximal sur l'essieu arrière en régime quasi statique TPT_r_max, le couple minimal sur l'essieu arrière en régime transitoire TPT_r_min_trans et le couple maximal sur l'essieu arrière en régime transitoire TPT_r_max_trans.

Parallèlement, le moyen de détermination 38 reçoit le couple dû à l'enfoncement de la pédale de frein TBP_sp et la dérivée du couple dû à l'enfoncement de la pédale de frein dTBP_sp et détermine le couple de freinage directement appliqué aux freins ΔFBP_sp.

Le moyen de compensation 37 du freinage par friction reçoit la consigne de couple total du véhicule TWH_sp, le couple minimal sur l'essieu arrière en régime quasi statique TPT_r_min, le couple maximal sur l'essieu arrière en régime quasi statique TPT_r_max, la consigne de couple du groupe motopropulseur arrière TPT_r_osp, la consigne de couple du groupe motopropulseur avant TPT_f_osp et le couple de freinage directement appliqué aux freins ΔFBP_sp.

Le moyen de compensation 37 du freinage par friction détermine alors le couple de freinage de la roue arrière gauche TFB_rl_osp compensée en fonction du couple résistant du groupe motopropulseur arrière TPT_r_osp, le couple de freinage de la roue arrière droite TFB_rr_osp compensée en fonction du couple résistant du groupe motopropulseur arrière TPT_r_osp, le couple de freinage de la roue avant gauche TFB_fl_osp en fonction du couple résistant du groupe motopropulseur avant TPT_f_osp et le couple de freinage de la roue avant droite TFB_fr_osp compensée en fonction du groupe motopropulseur avant TPT_f_osp.

Dans le moyen de commande 8 des groupes motopropulseurs, le moyen d'interprétation 24 de la pédale d'accélération reçoit des informations relatives à l'enfoncement de la pédale d'accélération et au rapport de boite en provenance des capteurs 7. Le moyen d'interprétation 24 reçoit par ailleurs l'estimation de la vitesse longitudinale du véhicule VV_x_est. Le moyen d'interprétation 24 détermine en sortie l'accélération générée par les groupes motopropulseurs GPT_sp.

Le moyen de calcul 32b de l'accélération du véhicule reçoit l'accélération générée par les groupes motopropulseurs GPT_sp et détermine la consigne d'accélération du véhicule GWH_sp.

Il est à noter que le fonctionnement des moyens 32a et 32b peut être fusionné en un seul moyen réparti sur les moyens 8 et 9.

Le moyen de compensation 31c reçoit la consigne d'accélération du véhicule GWH_sp et détermine la consigne de couple total du véhicule TWH_sp en appliquant la relation suivante.

$$TWH\_sp = M \cdot R \cdot GWH\_sp$$

avec M = la masse estimée du véhicule et
R = le rayon estimé de la roue

Ici encore, il est à noter que les moyens 31a, 31b et 31c peuvent être fusionnés, leurs fonctions se répartissant alors sur les moyens 8 et 9.

Le moyen d'optimisation 27 de consignes des groupes motopropulseurs reçoit en entrée, outre la valeur TWH_sp, le couple minimum de freinage hors freinage par friction TNBP_min ainsi que le couple minimal sur l'essieu arrière en régime quasi statique TPT_r_min, le couple maximal sur l'essieu arrière en régime quasi statique TPT_r_max, le couple minimal sur l'essieu arrière en régime transitoire TPT_r_min_trans et le couple maximal sur l'essieu arrière en régime transitoire TPT_r_max_trans.

Le moyen de compensation dynamique 28 des consignes des groupes motopropulseurs émet en sortie les valeurs de couple du groupe motopropulseur avant TPT_f_osp, de couple du groupe motopropulseur arrière TPT_r_osp et le rapport de boite à vitesse RCL_f_osp.

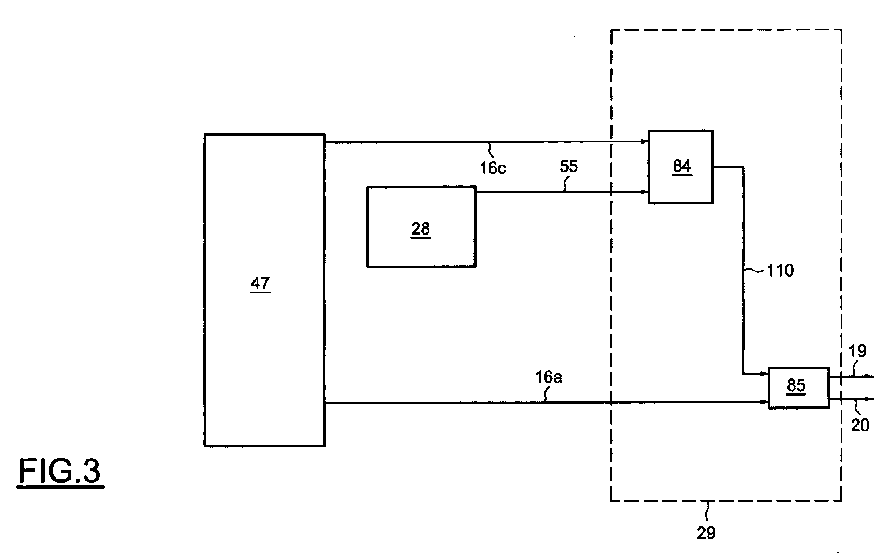

Le dispositif de coordination 29 du couple moteur reçoit du dispositif de coordination du freinage 47 les valeurs de couple minimal sur l'essieu arrière en régime statique TPT_r_min_stat, de couple maximal sur l'essieu arrière en régime statique TPT_r_max_stat, de couple minimal sur l'essieu arrière en régime dynamique TPT_r_min_dyn, de couple maximal sur l'essieu arrière en régime dynamique TPT_r_max_dyn, de couple minimal sur l'essieu avant en régime statique TPT_f_min_stat, de couple maximal sur l'essieu avant en régime statique TPT_f_max_stat, de couple minimal sur l'essieu avant en régime dynamique TPT_f_min_dyn, de couple maximal sur l'essieu avant en régime dynamique TPT_f_max_dyn, et de rapport de boite de vitesses RCL_f_tgt. Le dispositif de coordination 29 du couple moteur reçoit par ailleurs les valeurs de couple du groupe motopropulseur avant TPT_f_osp, de couple du groupe motopropulseur arrière TPT_r_osp du moyen de compensation dynamique 28. Le dispositif de coordination 29 comprend les organes décrits sur la figure 3.

Le dispositif de coordination 29 comprend un moyen de calcul 84 et un moyen de calcul 85. Le moyen de calcul 84 reçoit sur ses entrées les valeurs de couple minimal sur l'essieu arrière en régime statique TPT_r_min_stat, de couple minimal sur l'essieu arrière en régime dynamique TPT_r_min_dyn, de couple minimal sur l'essieu avant en régime statique TPT_f_min_stat et de couple minimal sur l'essieu avant en régime dynamique TPT_f_min_dyn. Le moyen de calcul reçoit également les valeurs de couple du groupe motopropulseur avant TPT_f_osp, de couple du groupe motopropulseur arrière TPT_r_osp en provenance du moyen de compensation dynamique 28. Le moyen de calcul 84 détermine la valeur maximale de couple applicable au groupe motopropulseur avant et arrière. Ces deux valeurs sont transmises au moyen de calcul 85 par la connexion 110.

Le moyen de calcul 85 reçoit sur ses entrées les valeurs de couple maximal sur l'essieu arrière en régime statique TPT_r_max_stat, de couple maximal sur l'essieu arrière en régime dynamique TPT_r_max_dyn, de couple maximal sur l'essieu avant en régime statique TPT_f_max_stat et de couple maximal sur l'essieu avant en régime dynamique TPT_f_max_dyn.

Le moyen de calcul 85 détermine alors les valeurs minimales parmi les valeurs reçues, ces valeurs étant émises en sortie en tant que valeurs cibles de couple des groupes motopropulseurs avant TPT_f_tgt et arrière TPT_r_tgt.

Le moyen de modulation 10 des consignes de couple à destination des systèmes de freinage et des groupes motopropulseurs reçoit par l'intermédiaire du moyen de calcul 39 de la vitesse de référence le seuil de potentiel d'adhérence en traction Mu_trac, le seuil de potentiel d'adhérence en freinage récupératif Mu_recup, le seuil dynamique de potentiel d'adhérence en traction Mu_trac_dyn, et le seuil dynamique de potentiel d'adhérence en freinage récupératif Mu_recup_dyn. Il reçoit par ailleurs, des capteurs 7, des valeurs de vitesse des roues. En sortie, il détermine une estimation de la vitesse longitudinale du véhicule VVH_x_est, et il émet deux signaux logiques d'interdiction d'utiliser le freinage récupératif sur le train arrière Flag_int_recup et d'activation du mode quatre roues motrices optimisé Flag_4wd_opt. Le moyen de calcul 39 est par ailleurs relié par les connexions 67a, 67b, 67c, 67d et 67e aux dispositifs ESP 41, ABS 42, de contrôle de la traction 44, d'interdiction du freinage récupératif sur le train arrière 45 et de support de la vitesse de référence 46.

Un moyen de détermination 40 de la situation détermine la situation du véhicule d'après les données reçues du moyen de calcul 39 de la vitesse de référence et de la vitesse des roues reçue des capteurs 7. Il est relié par les connexions 68a, 68b, 68c, 68d, 68e et 68f aux dispositifs ESP 41, ABS 42, RHF 43, de contrôle de la traction 44, d'interdiction du freinage récupératif sur le train arrière 45 et de support de la vitesse de référence 46. Le moyen de détermination 40 est par ailleurs connecté au commutateur 48 par la connexion 82.

Les dispositifs d'aide à la conduite et à la sécurité du véhicule tels que les dispositifs ESP 41, ABS 42, RHF 43, de contrôle de la traction 44, d'interdiction du freinage récupératif sur le train arrière 45 et de support de la vitesse de référence 46 sont connus en soi et ne seront pas décrit ici.

Le dispositif de coordination du freinage 47 comprend deux structures parallèles. Une première structure permet de déterminer des couples moteurs à destination du dispositif de coordination 29 du couple moteur et une deuxième structure permet de déterminer des couples résistants à destination du commutateur 48 et des systèmes de freinage 5a, 5b, 6a et 6b.

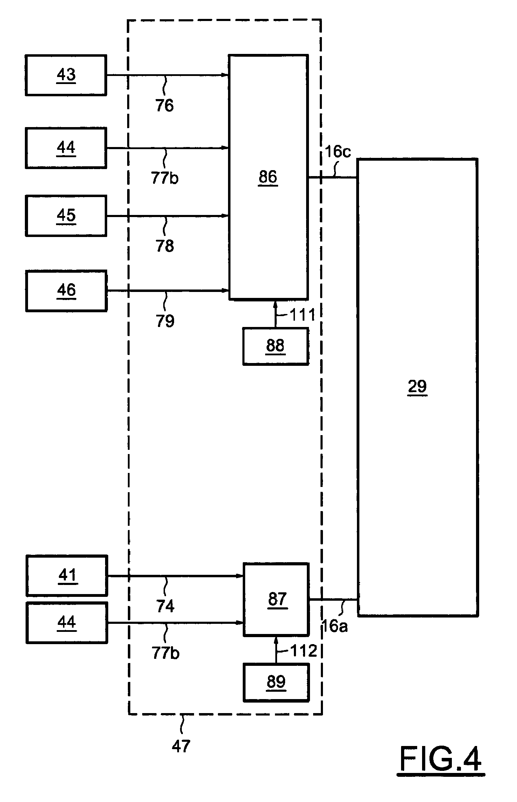

La première structure est décrite sur la figure 4. Les dispositifs ESP 41, ABS 42, RHF 43, de contrôle de la traction 44 sont reliés a un moyen de calcul 86 par les connexions 76, 77b, 78 et 79. Le moyen de calcul 86 est également relié à une mémoire 88 par la connexion 111.

Les dispositifs d'interdiction 45 du freinage récupératif sur le train arrière et de support de la vitesse de référence 46 sont reliés à un moyen de calcul 87 par les liaisons respectives 74 et 77b. Le moyen de calcul 87 est également relié à une mémoire 89 par la connexion 112.

Le moyen de calcul 86 reçoit les consignes de couples de couples des dispositifs est 41, ABS 42, RHF 43 et de contrôle de la traction 44. Le moyen de calcul 86 reçoit également, de la mémoire 88, une valeur de seuil correspondant à la valeur minimale attendue en sortie du moyen de calcul 86. En sortie du moyen de calcul 86 sont émises par la connexion 16e les valeurs de couple minimal sur l'essieu arrière en régime statique TPT_r_min_stat, de couple minimal sur l'essieu arrière en régime dynamique TPT_r_min_dyn, de couple minimal sur l'essieu avant en régime statique TPT_f_min_stat et de couple minimal sur l'essieu avant en régime dynamique TPT_f_min_dyn.

En parallèle, le moyen de calcul 87 reçoit les consignes de couples de couples provenant des dispositifs d'interdiction 45 du freinage récupératif sur le train arrière et de support de la vitesse de référence 46. Le moyen de calcul 87 reçoit également une valeur de seuil correspondant à la valeur minimale attendue en sortie du moyen de calcul 87. En sortie du moyen de calcul 86 sont émises par la connexion 16a les valeurs de couple maximal sur l'essieu arrière en régime statique TPT_r_max_stat, de couple maximal sur l'essieu arrière en régime dynamique TPT_r_max_dyn, de couple maximal sur l'essieu avant en régime statique TPT_f_max_stat et de couple maximal sur l'essieu avant en régime dynamique TPT_f_max_dyn.

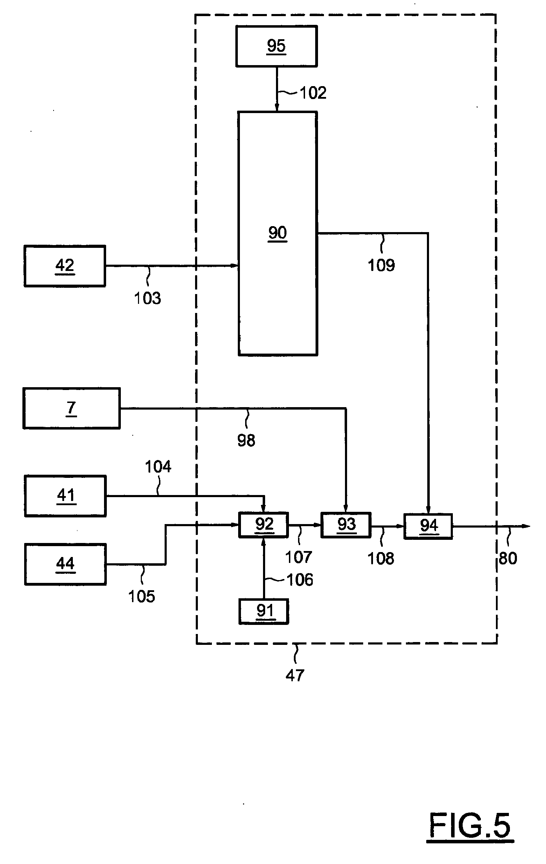

La deuxième structure du dispositif de coordination du freinage 47 est décrite sur la figure 5. Le dispositif de coordination du freinage 47 comprend des moyens de calcul 90, 92, 93 et 94 ainsi qu'une mémoire 91.

Le moyen de calcul 90 est relié au dispositif ABS 42 par la connexion 103 et à un répartiteur électronique de freinage 95 par la connexion 102.

Le moyen de calcul 92 est relié au dispositif ESP 41 par la connexion 104, au dispositif de contrôle de la traction 44 par la connexion 105 et à une mémoire 91 par la connexion 106.

Le moyen de calcul 93 est connecté au moyen de calcul 92 par la connexion 107 et aux capteurs 7 par la connexion 98.

Le moyen de calcul 94 est connecté par la connexion 109 au moyen de calcul 90 et par la connexion 108 au moyen de calcul 93.

Les moyens de calcul 90, 92, 93 et 94 reçoivent sur chacune de leurs entrées une valeur comportant quatre consignes de couple de freinage destiné à chacun des dispositifs de freinage par friction.

Le moyen de calcul 90 détermine la valeur maximale parmi les signaux reçus sur ces entrées. Pour cella, chacune des quatre consignes reçues en entrée est comparée à la consigne de rang comparable sur la ou les autres entrées. Par exemple, la consigne de rang i de la valeur j est comparée à la consigne de rang i. de la valeur k. On considère la consigne minimale pour un rang i parmi toutes les consigner. Ce mode de comparaison est valable pour les moyens de calcul 92, 93 et 94.

Les moyens 92 et 93 déterminent chacun la valeur minimale parmi les valeurs reçues sur leurs entrées.

Enfin, le moyen de calcul 94 détermine la valeur maximale parmi les signaux reçus sur ses entrées. Cette valeur comprend le couple de freinage sécuritaire de la roue arrière droite TFB__rr_tgt, le couple de freinage de la roue arrière gauche TFB_rl_tgt, le couple de freinage sécuritaire de la roue avant gauche TFB_fl_tgt et le couple de freinage sécuritaire de la roue avant droite TFB_fr_tgt. Cette valeur est alors émise par la connexion 80.

Le commutateur 48 reçoit ainsi sur ses entrées par la connexion 80, le couple de freinage sécuritaire de la roue arrière droite TFB_rr_tgt, le couple de freinage sécuritaire de la roue arrière gauche TFB_rl_tgt, le couple de freinage sécuritaire de la roue avant gauche TFB_fl_tgt et le couple de freinage sécuritaire de la roue avant droite TFB_fr_tgt et par la connexion 18e, le couple de freinage de la roue arrière droite TFB_rr_osp, le couple de freinage de la roue arrière gauche TFB_rl_osp, le couple de freinage de la roue avant gauche TFB_fl_osp et le couple de freinage de la roue avant droite TFB_fr_osp. Par ailleurs, le commutateur 48 reçoit par la connexion 82, des signaux de commande provenant du moyen 40.

Ainsi, selon la situation détectée par le moyen 40, le commutateur émet en sortie, soit le jeu de couples de freinage sécuritaire déterminé par le moyen de calcul 47, soit le jeu de couples de freinage déterminés par le moyen de compensation 37 du freinage par friction.

Ces consignes de freinage sont émises par la connexion 23 à destination du système de commande 11 des dispositifs de freinage qui transmet à son tour les consignes de freinage appropriées à chacun des dispositifs de freinage par friction 5a, 5b, 6a et 6b par les connexions 12, 13, 14 et 15.

Le système et le procédé de commande décrits ici permettent une prise en charge complète de la motricité et du freinage pour un véhicule hybride. Une approche bipolaire entre un dispositif déterminant les consignes de couple et de freinage d'après les requêtes de conducteur et un dispositif interprétant les différents signaux provenant des capteurs et dispositifs d'aide à la conduite et à la sécurité du véhicule permet de moduler lesdites requêtes du conducteur de façon à conserver le véhicule dans des conditions de roulage compatibles avec sa sécurité.

**Revendications**

1.  Système de commande d'un véhicule automobile du type à propulsion hybride à quatre roues motrices équipé d'au moins un groupe motopropulseur sur chaque train de roues, un premier groupe motopropulseur (1) comprenant au moins un moteur thermique, un deuxième groupe motopropulseur (2) comprenant au moins une machine électrique, le véhicule étant également équipé d'un système de freinage par friction sur chacune des roues motrices et des capteurs (7) le système comprenant

    un moyen de répartition (9) d'une requête de freinage entre le système de freinage par friction et au moins une machine électrique d'un groupe motopropulseur, apte à déterminer des couples de freinage au niveau de chaque roue compensés en fonction du couple résistant du groupe motopropulseur correspondant, ladite machine électrique étant capable de délivrer un couple résistant,

    un moyen de modulation (10) des consignes de couple à destination des systèmes de freinage et des groupes motopropulseurs apte à déterminer des plages de couples sur chaque essieu ainsi que des consignes de freinage sécuritaire au niveau de chaque roue, les plages et les consignes étant déterminés en fonction des signaux provenant des capteurs,

    le moyen de modulation (10) comprenant en outre un moyen de comparaison (48) apte à déterminer la consigne transmise aux dispositifs de freinage (5a, 5b,5c,5d) parmi les couples de freinage au niveau de chaque roue compensés provenant du moyen de répartition (9) et les consignes de freinage sécuritaire au niveau de chaque roue provenant du moyen de modulation (10),

    un moyen de commande (8) des groupes motopropulseurs apte à déterminer des valeurs de couples des groupes motopropulseurs et à comparer les valeurs de couples aux plages de couples sur chaque essieu provenant du moyen de modulation (10) afin de déterminer des valeurs cible de couple des groupes motopropulseurs (1,2),

Le moyen de répartition (9), le moyen de modulation (10) des consignes de couple et le moyen de commande (8) des groupes motopropulseurs étant capables d'interagir dynamiquement afin d'émettre des commandes de couple vers les groupes motopropulseurs et vers les systèmes de freinage par friction en vue de favoriser la stabilité du véhicule.

2. Système de commande selon la revendication 1 appliqué à un véhicule muni de moyens d'aide à la conduite (41,42,43,44,45,46), dans lequel le moyen de modulation (10) des consignes comprend un dispositif de coordination (47) du freinage capable de prendre en compte de façon concertée et hiérarchisée les signaux provenant des moyens d'aide à la conduite (41,42,43,44,45,46).

3. Système de commande selon la revendication 2, dans lequel le moyen de commande (8) des groupes motopropulseurs comprend un moyen de compensation dynamique (28) des consignes et un dispositif de coordination (29) du couple moteur capable de prendre en compte de façon concertée et hiérarchisée les signaux provenant des moyens d'aide à la conduite (41,42,43,44,45,46), des capteurs (7), du moyen de répartition (9), et du moyen de compensation dynamique (28) des consignes.

4. Système de commande selon l'une des revendications précédentes, dans lequel le premier groupe motopropulseur (1) est relié au train avant et le deuxième train motopropulseur (2) est relié au train arrière, le moyen de modulation (10) des consignes de couple étant capable de limiter le freinage récupératif du train arrière afin de favoriser l'adhérence dudit train arrière.

5. Système de commande selon l'une des revendications précédentes, dans lequel le moyen de répartition (9) du freinage comprend un moyen de détermination (38) de la consigne de préfreinage apte à exercer une sollicitation sur le système de freinage par friction ne générant pas de couple de force mais réduisant la durée de réponse à une sollicitation ultérieure.

6. Procédé de commande d'un véhicule automobile du type à propulsion hybride à quatre roues motrices équipé d'au moins un groupe motopropulseur sur chaque train de roues, un premier groupe motopropulseur (1) comprenant au moins un moteur thermique, un deuxième groupe motopropulseur (2) comprenant au moins une machine électrique, procédé comprenant des étapes au cours desquelles :

on détermine des couples de freinage au niveau de chaque roue compensés en fonction du couple résistant du groupe motopropulseur correspondant,

on détermine des plages de couples sur chaque essieu ainsi que des consignes de freinage sécuritaire au niveau de chaque roue,

on détermine la consigne transmise aux dispositifs de freinage (5a,5b,5c,5d) parmi les couples de freinage au niveau de chaque roue compensés provenant d'un moyen de répartition (9) et les consignes de freinage sécuritaire au niveau de chaque roue provenant d'un moyen de modulation (10),

on détermine des valeurs de couples des groupes motopropulseurs et

on compare les valeurs de couples aux plages de couples sur chaque essieu provenant du moyen de modulation (10) afin de déterminer des valeurs cible de couple des groupes motopropulseurs (1,2).

7. Procédé de commande selon la revendication 6, dans lequel on détermine à l'intérieur des plages de couple de freinage récupératif précédemment déterminées des couples de freinage récupératif pour la train avant en régime statique, le train arrière en régime statique, pour le train avant en régime dynamique et pour le train avant en régime dynamique, les couples de freinage étant déterminés en fonction des couples de freinage par friction de chaque dispositif de freinage par friction.

8. Procédé de commande selon la revendication 7 appliqué à un véhicule muni de moyens d'aide à la conduite, dans lequel on hiérarchise la prise en compte des consignes de couple de freinage provenant des moyens d'aide à la conduite afin de déterminer des consignes de freinage favorisant la stabilité du véhicule.

9. Procédé de commande selon la revendication 8, dans lequel on limite le freinage récupératif sur le train arrière afin de favoriser la stabilité du véhicule.

10. Procédé de commande selon l'une des revendications 7 à 9, dans lequel on détermine une consigne minimale de couple de freinage par friction, afin d'augmenter la vitesse de réponse des dispositifs de freinage en cas de requête de freinage impliquant une utilisation importante du freinage par friction.

**Claims**

1. System for controlling a motor vehicle of the type with hybrid propulsion with four-wheel-drive fitted with at least one power plant on each wheel train, a first power plant (1) comprising at least one heat engine, a second power plant (2) comprising at least one electrical machine, the vehicle also being fitted with a friction braking system on each of the drive wheels and sensors (7), the system comprising a system (9) for distributing a braking request between the friction braking system and at least one electrical machine of a power plant, capable of determining braking torques at each wheel that are compensated for as a function of the resisting torque of the corresponding power plant, the said electrical machine being capable of delivering a resisting torque,

a means (10) for modulating the torque instructions to the braking systems and power plants capable of determining torque ranges on each axle and safety braking instructions at each wheel, the ranges and the instructions being determined as a function of the signals originating from the sensors,

the modulation means (10) also comprising a comparison means (48) capable of determining the instruction transmitted to the braking devices (5a, 5b, 5c, 5d) amongst the compensated braking torques at each wheel originating from the distribution means (9) and the safety braking instructions at each wheel originating from the modulation means (10),

a control means (8) for controlling the power plants that is capable of determining torque values of the power plants and of comparing the torque values with the torque ranges on each axle originating from the modulation means (10) in order to determine torque target values of the power plants (1, 2),

the distribution means (9), the modulation means (10) for modulating the torque instructions and the control means (8) for controlling the power plants being capable of interacting dynamically in order to transmit torque commands to the power plants and to the friction braking systems for the purpose of promoting the stability of the vehicle.

2. Control system according to Claim 1, applied to a vehicle furnished with driving-aid means (41, 42, 43, 44, 45, 46), in which the modulation means (10) for modulating the instructions comprises a braking coordination device (47) capable of taking account in a concerted and hierarchical manner of the signals originating from the driving-aid means (41, 42, 43, 44, 45, 46).

3. Control system according to Claim 2, in which the control means (8) for controlling the power plants comprises a dynamic compensation means (28) for compensating for the instructions and a coordination device (29) for coordinating the engine torque capable of taking account in a concerted and hierarchical manner of the signals originating from the driving-aid means (41, 42, 43, 44, 45, 46), from the sensors (7), from the distribution means (9), and from the dynamic instruction-compensation means (28).

4. Control system according to one of the preceding claims, in which the first power plant (1) is connected to the front wheel train and the second power plant (2) is connected to the rear wheel train, the modulation means (10) for modulating the torque instructions being capable of limiting the recovery braking of the rear wheel train in order to promote the grip of the said rear wheel train.

5. Control system according to one of the preceding claims, in which the distribution means (9) for distributing the braking comprises a means (38) for determining the pre-braking instruction capable of applying a stress on the friction braking system that does not generate any force torque but that reduces the duration of response to a subsequent stress.

6. Method for controlling a motor vehicle of the type with hybrid propulsion with four-wheel-drive fitted with at least one power plant on each wheel train, a first power plant (1) comprising at least one heat engine, a second power plant (2) comprising at least one electrical machine, the method comprising steps during which:

braking torques are determined at each wheel that are compensated for as a function of the resisting torque of the corresponding power plant,

torque ranges on each axle and safety braking instructions at each wheel are determined,

the instruction transmitted to the braking devices (5a, 5b ,5c, 5d) is determined amongst the compensated braking torques at each wheel originating from a distribution means (9) and the safety braking instructions at each wheel originating from a modulation means (10),

torque values of the power plants are determined and

the torque values are compared with the torque ranges on each axle originating from the modulation means (10) in order to determine torque target values of the power plants (1, 2).

7. Control method according to Claim 6, in which, within the previously determined recovery braking torque ranges, recovery braking torques are determined for the front wheel train in static regime, the rear wheel train in static regime, for the front wheel train in dynamic regime and for the rear wheel train in dynamic regime, the braking torques being determined as a function of the friction braking torques of each friction braking device.

8. Control method according to Claim 7, applied to a vehicle furnished with driving-aid means, in which the taking account of the braking torque instructions originating from the driving-aid means is hierarchized in order to determine braking instructions promoting the stability of the vehicle.

9.  Control method according to Claim 8, in which the recovery braking on the rear wheel train is limited in order to promote the stability of the vehicle.

10.  Control method according to one of Claims 7 to 9, in which a minimal friction braking torque instruction is determined in order to increase the speed of response of the braking devices in the event of a braking request involving a considerable use of friction braking.

**Patentansprüche**

1.  System zur Steuerung eines Kraftfahrzeugs von der Art mit Allrad-Hybridantrieb, das mit mindestens einer Antriebseinheit auf jedem Radsatz ausgestattet ist, wobei eine erste Antriebseinheit (1) mindestens einen Verbrennungsmotor enthält, eine zweite Antriebseinheit (2) mindestens eine elektrische Maschine enthält, wobei das Fahrzeug ebenfalls mit einem Reibungsbremssystem an jedem der Antriebsräder und mit Sensoren (7) ausgestattet ist, wobei das System enthält eine Einrichtung (9) zur Aufteilung einer Bremsanforderung zwischen dem Reibungsbremssystem und mindestens einer elektrischen Maschine einer Antriebseinheit, die Bremsmomente im Bereich jedes Rads bestimmten kann, die abhängig vom Widerstandsmoment der entsprechenden Antriebseinheit kompensiert werden, wobei die elektrische Maschine ein Widerstandsmoment liefern kann,
eine Einrichtung (10) zur Modulation der Momentsollwerte für die Bremssysteme und die Antriebseinheiten, die Drehmomentbereiche an jeder Achse sowie Sicherheitsbremssollwerte im Bereich jedes Rads bestimmen kann, wobei die Bereiche und die Sollwerte abhängig von den von den Sensoren kommenden Signalen bestimmt werden,
wobei die Modulationseinrichtung (10) außerdem eine Vergleichseinrichtung (48) enthält, die den an die Bremsvorrichtungen (5a, 5b, 5c, 5d) übertragenen Sollwert unter den kompensierten Bremsmomenten im Bereich jedes Rads, die von der Aufteilungseinrichtung (9) kommen, und den Sicherheitsbremssollwerten im Bereich jedes Rads, die von der Modulationseinrichtung (10) kommen, bestimmen kann,
eine Steuereinrichtung (8) der Antriebseinheiten, die Drehmomentwerte der Antriebseinheiten bestimmen und die Drehmomentwerte mit den Drehmomentbereichen an jeder Achse vergleichen kann, die von der Modulationseinrichtung (10) kommen, um Drehmomentzielwerte der Antriebseinheiten (1, 2) zu bestimmen,
wobei die Aufteilungseinrichtung (9), die Modulationseinrichtung (10) der Drehmomentsollwerte und die Steuereinrichtung (8) der Antriebseinheiten fähig sind, dynamisch zu interagieren, um Drehmomentbefehle an die Antriebseinheiten und an die Reibungsbremssysteme zu übertragen, um die Stabilität des Fahrzeugs zu unterstützen.

2.  Steuersystem nach Anspruch 1, angewendet an ein Fahrzeug, das mit Fahrhilfeeinrichtungen (41, 42, 43, 44, 45, 46) versehen ist, bei dem die Modulationseinrichtung (10) der Sollwerte eine Vorrichtung zur Koordination (47) des Bremsens enthält, die die von den Fahrhilfeeinrichtungen (41, 42, 43, 44, 45, 46) kommenden Signale konzertiert und hierarchisiert berücksichtigen kann.

3.  Steuersystem nach Anspruch 2, bei dem die Steuereinrichtung (8) der Antriebseinheiten eine dynamische Kompensationseinrichtung (28) der Sollwerte und eine Koordinationseinrichtung (29) des Motordrehmoments enthält, die die von den Fahrhilfeeinrichtungen (41, 42, 43; 44, 45, 46), den Sensoren (7), der Aufteilungseinrichtung (9) und der dynamischen Kompensationseinrichtung (28) der Sollwerte kommende Signale konzertiert und hierarchisiert berücksichtigen kann.

4.  Steuersystem nach einem der vorhergehenden Ansprüche, bei dem die erste Antriebseinheit (1) mit der Vorderachse und die zweite Antriebseinheit (2) mit der Hinterachse verbunden ist, wobei die Modulationseinrichtung (10) der Drehmomentsollwerte die Nutzbremsung der Hinterachse begrenzen kann, um die Haftung der Hinterachse zu unterstützen.

5.  Steuersystem nach einem der vorhergehenden Ansprüche, bei dem die Aufteilungseinrichtung (9) des Bremsens eine Bestimmungseinrichtung (38) des Vorbremssollwerts enthält, die eine Beanspruchung auf das Reibungsbremssystem ausüben kann, die kein Kraftmoment erzeugt, sondern die Reaktionsdauer auf eine spätere Beanspruchung reduziert.

6.  Verfahren zur Steuerung eines Kraftfahrzeugs von der Art mit Allrad-Hybridantrieb, das mit mindestens einer Antriebseinheit auf jedem Radsatz ausgestattet ist, wobei eine erste Antriebseinheit (1) mindestens einen Verbrennungsmotor enthält, eine zweite Antriebseinheit (2) mindestens eine elektrische Maschine enthält, wobei das Verfahren Schritte enthält, während denen:

    Bremsmomente im Bereich jedes Rads bestimmt werden, die abhängig vom Widerstandsmoment der entsprechenden Antriebseinheit kompensiert werden,
    Drehmomentbereiche an jeder Achse sowie Sicherheitsbremssollwerte im Bereich jedes Rads bestimmt werden,

der an die Bremsvorrichtungen (5a, 5b, 5c, 5d) übertragenen Sollwert unter den kompensierten Bremsmomenten im Bereich jedes Rads, die von einer Aufteilungseinrichtung (9) kommen, und den Sicherheitsbremssollwerten im Bereich jedes Rads, die von einer Modulationseinrichtung (10) kommen, bestimmt wird,

Drehmomentwerte der Antriebseinheiten bestimmt werden, und

die Drehmomentwerte mit den Drehmomentbereichen an jeder Achse verglichen werden, die von der Modulationseinrichtung (10) kommen, um Drehmomentzielwerte der Antriebseinheiten (1, 2) zu bestimmen.

7. Steuerverfahren nach Anspruch 6, bei dem innerhalb der vorher bestimmten Nutzbremsmomentbereiche Nutzbremsmomente für die Vorderachse im statischen Betrieb, die Hinterachse im statischen Betrieb, für die Vorderachse im dynamischen Betrieb und für die Hinterachse im dynamischen Betrieb bestimmt werden, wobei die Bremsmomente abhängig von den Reibungsbremsmomenten jeder Reibungsbremsvorrichtung bestimmt werden.

8. Steuerverfahren nach Anspruch 7, angewendet an ein Fahrzeug, das mit Fahrhilfeeinrichtungen ausgestattet ist, bei dem die Berücksichtigung der von den Fahrhilfeeinrichtungen kommenden Bremsmomentsollwerte hierarchisiert wird, um Bremssollwerte zu bestimmen, die die Stabilität des Fahrzeugs unterstützen.

9. Steuerverfahren nach Anspruch 8, bei dem die Nutzbremsung an der Hinterachse begrenzt wird, um die Stabilität des Fahrzeugs zu unterstützen.

10. Steuerverfahren nach einem der Anspruch 7 bis 9, bei dem ein Reibungsbremsmoment-Mindestsollwert bestimmt wird, um die Reaktionsgeschwindigkeit der Bremsvorrichtungen im Fall einer Bremsanforderung zu erhöhen, die eine starke Nutzung der Reibungsbremsung impliziert.

FIG.1

**FIG.2**

**FIG.3**

FIG.4

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6957874 B2